# EUROPÄISCHE PATENTSCHRIFT

(11) **EP 0 909 235 B1**
(45) Veröffentlichungstag und Bekanntmachung des Hinweises auf die Patenterteilung: **15.10.2003**
(21) Anmeldenummer: 98909210.1
(22) Anmeldetag: 20.03.1998
(51) Int. Cl.: B29D 28/00, B29C 47/12

(54) **NETZARTIGES FLÄCHENGEBILDE AUS EINEM POLYMER**
NET-LIKE, FLAT MATERIAL OUT OF A POLYMER
MATERIAU PLAT EN TREILLIS CONSTITUE DE POLYMERE

(30) Priorität: 21.03.1997 AT 496977
(43) Veröffentlichungstag der Anmeldung: 21.04.1999
(73) Patentinhaber: LENZING AKTIENGESELLSCHAFT, 4860 Lenzing (AT)
(72) Erfinder: SCHLOSSNIKL, Christian, A-4840 Vöcklabruck (AT); FIRGO, Heinrich, A-4840 Vöcklabruck (AT)
(74) Vertreter: Schwarz, Albin, Dr.
(86) Internationale Anmeldenummer: AT9800073
(87) Internationale Veröffentlichungsnummer: WO98042902

(56) Entgegenhaltungen:
- EP-A- 0 574 870
- EP-A- 0 662 283
- DE-B- 1 109 131
- FR-A- 2 131 842
- GB-A- 1 122 451
- "KUNSTSTOFFE" 1962 , CARL HANSER ZEITSCHRIFTENVERLAG , MÜNCHEN VOL.52 NR 8 XP002084743 in der Anmeldung erwähnt siehe Seite 492 - Seite 494

## Beschreibung

Die vorliegende Erfindung betrifft ein Flächengebilde aus einem Polymer, welches Flächengebilde Fäden aufweist, die nach Art eines Netzes über Verbindungsstellen unter Ausbildung von Maschen miteinander verbunden sind, wobei die Fäden an den Verbindungsstellen zumindest teilweise miteinander verschmolzen sind. Die vorliegende Erfindung betrifft ferner ein Verfahren zur Herstellung eines derartigen Flächengebildes.

Es ist bekannt, daß thermoplastische Kunststoffe zu Bahnen von netz - oder gewebeartiger Struktur verarbeitet werden können (Übersichtsartikel in "Kunststoffe", Band 52, Seiten 492-494, 1962 und "Kunststoff-Extrudertechnik", 2. Auflage, seiten 446-450, 1963, Carl Hanser Verlag München) und GB-A-1 122 451. Als Extrusionswerkzeuge bzw. -düsen werden dazu Mehrlochsysteme in Kreis- oder Flachanordnung verwendet, wobei jedes Düsenloch aus zwei Halblöchern zusammengesetzt ist, die in zwei getrennten und relativ zueinander in engem Kontakt bewegten Bauelementen liegen. Dieses Werkzeug kann als Kreuzung aus einem Mehrlochkopf und einem Folienblaskopf mit der Spaltweite Null und einem rotierenden, ringförmigen Mundstück und gegebenenfalls auch gegenläufig rotierendem Dorn betrachtet werden. Die Bewegung kann dabei eine kontinuierliche Rotation oder eine periodisch wechselnde Rotation sein. Durch die Bewegung werden die Lochreihen regelmäßig zur Deckung gebracht und wieder getrennt. Während der Deckung entstehen die "Knoten" des Netzes, d.h. die Verbindungsstellen, und in der anderen Phase die Maschen.

Die erhaltenen Kunststoffnetze können anschließend noch längs und/oder quer verstreckt werden, um dem Netz gewünschte mechanische Eigenschaften zu verleihen. Derartige Verfahren sind z.B. in der GB-A-91 11 304, der GB-A-89 20 843, der GB-A-85 09 498, der GB-A - 82 19 477 und der GB-A - 81 10 472 beschrieben.

Die extrudierten Kunststoffnetze werden für eine Vielzahl von Verwendungen eingesetzt, wie z.B. als Verpackungen für Lebensmittel, Schutznetze für empfindliche Oberflächen, Verstärkung für Geotextilien etc.

Als Kunststoffe zur Herstellung der Netze werden thermoplastische Polymere, wie z.B. Polyethylen und Polypropylen, eingesetzt. Diese können durch Verschmelzen bzw. Verschweißen der Polymerfäden die Knoten ausbilden. Diese Polymere sind jedoch nicht biologisch abbaubar, sodaß die oben erwähnten Produkte entsorgt werden müssen.

Die Aufgabe der vorliegenden Erfindung besteht nun darin, netzartige Flächengebilde aus einem biologisch abbaubaren Polymer zur Verfügung zu stellen.

Das erfindungsgemäße Flächengebilde weist Fäden auf, die nach Art eines Netzes über Verbindungsstellen unter Ausbildung von Maschen miteinander verbunden sind, wobei die Fäden an den Verbindungsstellen zumindest teilweise miteinander verschmolzen sind, und ist dadurch gekennzeichnet, daß das Polymer im wesentlichen Cellulose ist.

Das erfindungsgemäße Flächengebilde kann hergestellt werden, indem eine formbare bzw. spinnbare Masse, welche das Polymer enthält, mittels einer Extrusionsdüse geformt wird, die zwei Gruppen von Spinnöffnungen aufweist, die gegeneinander bewegbar und derartig angeordnet sind, daß die Maschen gebildet werden können, wobei als formbare Masse eine Lösung von Cellulose in einem wässerigen tertiären Aminoxid eingesetzt wird, welche nach Verlassen der Extrusionsdüse über einen Luftspalt in ein wässeriges Fällbad geführt wird.

Die Erfindung beruht somit auf der überraschenden Erkenntnis, daß sich spinnbare Lösungen von Cellulose in einem wässerigen tertiären Aminoxid nach dem gleichen Verfahren und mit den gleichen Werkzeugen, die zur Herstellung von Netzen aus thermoplastischen Kunststoffen verwendet werden, zu einem netzartigen Gebilde ausformen lassen, welches über einen Luftspalt in ein Fällbad gezogen werden kann, in welchem die Cellulose gefällt und das Netz fixiert wird.

Die Knoten- und Maschenstruktur der ausgeformten Lösung ist sogar in einem derart hohen Ausmaß stabil, daß die mittels der Extrusionsdüse zu einem Netz geformte Celluloselösung im Luftspalt sogar verstreckt werden kann, wobei sowohl in Extrusionsrichtung als auch quer dazu verstreckt werden kann, ohne daß die ausgeformte Celluloselösung reißt.

Im erfindungsgemäßen Verfahren wird als tertiäres Aminoxid bevorzugt N-Methylmorpholin-N-oxid eingesetzt.

Die Erfindung betrifft ferner die Verwendung einer zur Herstellung von Kunststoffnetzen an sich bekannten Spinnvorrichtung zur Herstellung von netzartigen Flächengebilden aus Cellulose.

Ein Verfahren zur Herstellung spinnbarer bzw. formbarer Lösungen von Cellulose in einem wässerigen tertiären Aminoxid ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulosesuspension wird erhitzt und unter Druckverminderung wird so lange Wasser abgezogen, bis die Cellulose in Lösung geht.

Aus der DE-A - 28 44 163 ist bekannt, zur Herstellung von Cellulosefasern zwischen Spinndüse und Fällbad eine Luftstrecke bzw. einen Luftspalt zu legen, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Eine Vorrichtung und ein Verfahren zur Herstellung von nahtlosen Schlauchfolien ist aus der WO 93/13670 bekannt. Gemäß diesem bekannten Verfahren wird die Celluloselösung durch eine Extrusionsdüse mit ringförmigem Extrusionsspalt zu einem Schlauch geformt, der über einen zylindrischen Dorn gezogen und in das Fällbad eingebracht wird.

Aus der WO 95/35340 ist ein Blasverfahren zur Herstellung von orientierten Cellulosefolien durch Verspinnen einer Celluloselösung in ein Fällbad bekannt, bei welchem die Lösung über eine Filmblasdüse und einen äußeren Luftspalt nach unten in das Fällungsbad extrudiert wird.

Aus der DE-A - 195 15 137 ist ein Verfahren zur Herstellung von Schlauchfolien bekannt, gemäß welchem die Celluloselösung zunächst zu einem Schlauch extrudiert wird, wobei dieser Schlauch auf dem Weg vom Ringdüsenaustritt bis zum Eintritt in das Fällungsmedium in Extrusionsrichtung verstreckt und durch einen in dem Schlauchinnenraum wirksamen Gasüberdruck in einem Verhältnis im Bereich zwischen 1:1 und 1:10 aufgeweitet, d.h. gedehnt wird. Durch diese Dehnung wird der Schlauch somit quer zur Extrusionsrichtung verstreckt.

Eine Vorrichtung zur Herstellung cellulosischer Schlauchfolien durch Extrusion einer Lösung von Cellulose in einem tertiären Aminoxid in ein unterhalb der Vorrichtung befindliches Fällungsmittel, welche Vorrichtung eine Extrusionsdüse mit einem im wesentlichen ringförmigen Extrusionsspalt umfaßt, wobei im Inneren des vom Extrusionspaltes gebildeten Ringes eine Zuleitung für Fällungsmittel und eine Ableitung für gebrauchtes Fällungsmittel vorgesehen ist, kann auch der WO 95/07811 entnommen werden. Bei dieser Vorrichtung kann unterhalb der Ableitung eine Distanzscheibe vorgesehen sein, die ein Zusammenfallen der extrudierten Schlauchfolie im Fällbad verhindern soll.

Eine bevorzugte Ausgestaltung des erfindungsgemäßen Flächengebildes ist dadurch gekennzeichnet, daß ein Teil der Maschen aufgefüllt ist. Es können auch sämtliche Maschen aufgefüllt sein. In diesem Fall ist das erfindungsgemäße Flächengebilde eine Folie mit netzartiger Verstärkung.

Eine weitere Ausgestaltung des erfindungsgemäßen Flächengebildes ist dadurch gekennzeichnet, daß es folienartige Abschnitte aufweist.

Das nach dem Fällen der Cellulose erhaltene Flächengebilde wird bevorzugt noch gewaschen, wobei während des Waschvorganges oder auch anschließend verschiedenste Hilfsstoffe, wie z.B. Glycerin, eingebracht werden können. Anschließend wird das Flächengebilde getrocknet und/oder weiter konfektioniert. Dabei hat es sich als günstig erwiesen, die Hilfsstoffe noch vor dem endgültigen Trocknen einzubringen, da in diesem zustand die Aufnahmefähigkeit wesentlich höher ist. Bei manchen Hilfsstoffen, wie z.B. bestimmten Farbstoffen und Weichmachern, kann es auch vorteilhaft sein, die Hilfsstoffe noch vor der Formgebung in die Spinnmasse einzubringen.

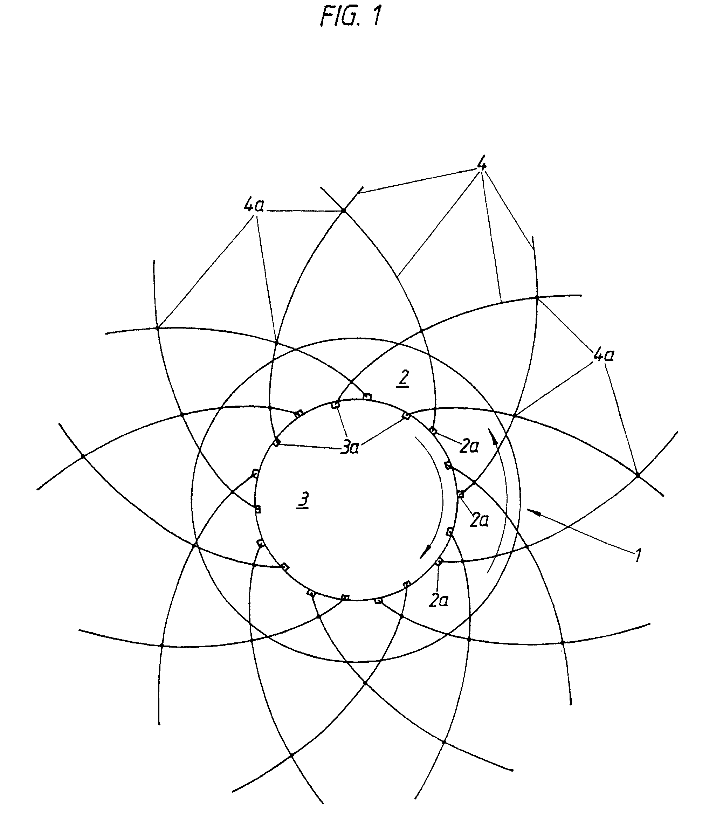

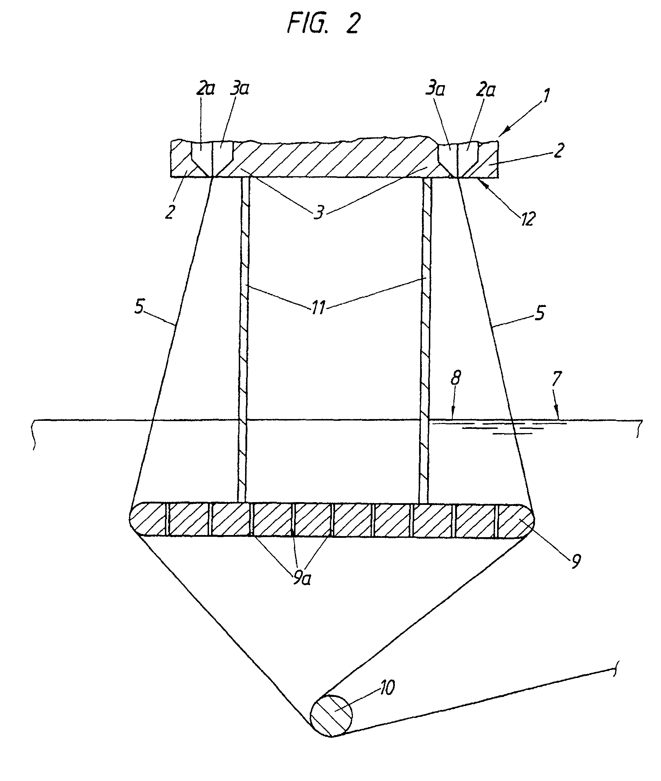

An Hand der beigefügten Zeichnung mit den beiden Figuren 1 und 2 werden bevorzugte Ausführungsformen der Erfindung noch näher beschrieben.

Die Figur 1 zeigt die Unterseite einer Spinndüse, die im Stand der Technik zur Herstellung von Netzen aus einem thermoplastischen Polymer verwendet wird. Diese Technik ist beispielsweise in "Extrusions-Werkzeuge für Kunststoffe und Kautschuk", 2. Auflage, Seiten 207-208, Carl Hanser Verlag München Wien, und in "Kunststoff-Extrudertechnik", G. Schenkel, 2. Auflage, Seiten 446-449, Carl Hanser Verlag München, 1963, beschrieben. Spinndüsen zur Herstellung derartiger Netze werden beispielsweise von der Firma Netlon Limited, Blackburn, England, angeboten.

In der Figur 1 ist mit der Bezugsziffer 1 die Spinndüse bzw. das Extrusionswerkzeug bezeichnet, welches zwei kreisförmige Reihen 2a, 3a von Spinnöffnungen bzw. Düsen aufweist. Die eine Düsenreihe 2a ist am Innenrand einer kreisringförmigen Scheibe 2 angeordnet, und die andere Düsenreihe 3a ist am Außenrand einer dazu konzentrischen Kreisscheibe 3 angeordnet. Wird nun eine spinnbare Celluloselösung extrudiert, so entsteht ein netzartiger Schlauch, wenn beide Düsenringe 2, 3 gegenläufig rotieren oder oszillieren. Die Rotation oder Oszillation der Düsenringe 2, 3 ist mittels Pfeilen angedeutet. Die Verbindungsstellen des Netzes bilden sich, wenn jeweils zwei Düsen einander gegenüberstehen und sich die austretenden Fäden berühren. Dabei verschmelzen bzw. verkleben diese Fäden miteinander.

Die aus der Spinndüse 1 austretenden Fäden sind mit der Bezugsziffer 4 bezeichnet. In der in der Figur 1 gewählten Darstellung bewegen sich die Fäden 4 auf den Betrachter zu, bzw. sieht der Betrachter in das sich bildende Schlauchnetz hinein. Die Verbindungsstellen, an denen die Fäden 4 miteinander verklebt bzw. verschmolzen sind, also die "Knoten" des Netzes, sind mit der Bezugsziffer 4a bezeichnet. Die Flächen zwischen den Fäden 4 sind die "Maschen" des Netzes.

Nach Extrusion wird die im Luftspalt netzartig ausgeformte Celluloselösung zur Fällung der Cellulose und Fixierung der Netzstruktur in ein wässeriges Fällbad geführt. Eine derartige Anlage ist im Schnitt in der Figur 2 schematisch dagestellt.

Die Figur 2 zeigt mit 1 die in der Figur 1 dargestellte Spinndüse in einer Stellung, in welcher die Düsen aus der Düsenreihe 2a den Düsen aus der Düsenreihe 3a gegenüberstehen. Die Celluloselösung wird über die sich bewegenden Düsenreihen 2a, 3a extrudiert, wodurch die Celluloselösung in Form eines Netzes 5 in den Luftraum, der zwischen der Fällbadoberfläche 7 und der Unterseite 12 der Düse 1 besteht, extrudiert wird.

Die als Netzschlauch extrudierte Lösung 5 wird in das Fällbad 7 abgezogen, in welchem sie mit Fällungsmittel in Kontakt kommt, wodurch die gelöste Cellulose koaguliert und das Aminoxid in das Fällbad abgegeben wird.

Der Netzschlauch 5 wird über das Umlenkorgan 10 abgezogen und dabei in Transportrichtung, das heißt in Richtung Fällbad 7, verstreckt.

Der Netzschlauch 5 wird über einen Distanzhalter 9 gezogen. Dieser Distanzhalter 9 hat die Form einer kreisförmigen Scheibe, die mittels Stangen 11 mit der Düse 1 fest verbunden ist. Der Distanzhalter 9 kann durchgängige Bohrungen 9a zum Stoffaustausch aufweisen. statt einer Scheibe kann auch ein Ring als Distanzhalter vorgesehen sein.

Mit dem Distanzhalter 9 wird der Netzschlauch 5 gedehnt, was einem Verstrecken quer zur Transportrichtung entspricht. Es ist klar, daß dieses Verstrecken quer zur Extrusionsrichtung mit der Größe des kreisförmigen Distanzhalters 9 zunimmt.

Der Distanzhalter ist bevorzugt so ausgebildet, daß die Größe der Querschnittsfläche verändert werden kann. Dies ist z.B. bei einer Scheibe bzw. einem Ring mit verschiebbaren Gliedern möglich, analog einer Lochblende, bei der die verschiebbaren Teile auf- bzw. ineinander gleiten können, wodurch der Außendurchmesser veränderbar ist.

Weiters kann eine Veränderung der Größe der Querschnittsfläche auch dadurch erreicht werden, daß der Distanzhalter aus einem elastischen Ring, z.B. aus Gummi, besteht, der mit Luft, Wasser oder dergleichen beaufschlagt werden kann. Über das im Inneren befindliche Medium ist damit der Durchmesser des elastischen Ringes steuerbar. Eine Variante dieser Ausführungsform besteht darin, daß kein vollständiger Ring verwendet wird, sondern daß die Innenseite aus einem festen Teil aus z.B. Stahl oder Kunststoff besteht und auf diesem ein elastischer Teil befestigt ist. Eine weitere Ausführungsform besteht in einer Halbschale, eventuell bestehend aus Segmenten, deren Fixpunkt verschiebbar ist, sodaß sich dadurch der Außendurchmesser verändert (Regenschirmprinzip).

Wird bei einer in der Figur 1 dargestellten Düse 1 ein Gleitspalt von z.B. einigen Zehntel Millimetern eingestellt, so kann die Celluloselösung zu einer Folie mit netzartigen Verstärkungen bzw. zu einem Netz, bei welchem die Maschen ausgefüllt sind, ausgeformt werden. Auch dieses Flächengebilde kann mit einer in Figur 2 dargestellten Anlage hergestellt werden, sofern zwischen den Düsenreihen 2a und 3a ein Spalt zur Extrusion des Folienteils zwischen den Maschen vorgesehen ist. Ferner muß eine Zu- und Ableitung vorgesehen sein, um Fällungsmittel 8 in das Innere des Schlauches bzw. wieder heraus zu bringen. Derartige Zu- und Ableitungen sind beispielsweise bei einer Spinnvorrichtung zur Herstellung cellulosischer Folien aus der WO 95/07811 der Anmelderin bekannt.

Eine Verstreckung quer zur Extrusionsrichtung kann mittels einer Distanzscheibe 9 erzielt werden. Eine Querverstreckung kann bei Verwendung einer an sich bekannten Blasfolienvorrichtung auch mit Gasdruck im Inneren des Folienschlauches 5 erzielt werden. Das Blasdüsenprinzip ist z.B. aus der EP-A - 0 662 283 bekannt.

Es hat sich gezeigt, daß sich eine spinnbare Celluloselösung nicht nur zu schlauchartigen Netzen, sondern auch zu Flachnetzen verarbeiten läßt. Dabei sind unterschiedliche Ausführungsformen möglich. So kann das oben für eine Ringdüse beschriebene Verfahren auch mit einer Flachdüse ausgeführt werden. Die beiden Düsenhälften führen dann zueinander eine oszillierende Bewegung aus, indem entweder eine oder beide Düsenhälften bewegt werden und es dadurch zu einer relativen Bewegung der beiden Düsenhälften kommt.

Eine weitere Möglichkeit besteht darin, daß die Düsen durch geschlitzte Düsenscheiben gebildet werden, die unmittelbar hintereinander angeordnet sind und relativ zueinander eine schwingende Bewegung ausführen, wobei mindestens der Schlitz der einen Düsenscheibe die Form einer Linie mit mehrfachem Richtungswechsel hat und wobei die Schlitzlinien beider Düsenscheiben derart verlaufen, daß sie sich bei der relativen Bewegung in ihrer ganzen Ausdehnung überstreichen und sich dabei ständig in einer Anzahl von Punkten überlagern. Derartige Düsenanordnungen sind z.B. in "Kunststoffe", Band 52, Heft 8, Seiten 492-494, 1962 beschrieben und gestatten die Herstellung erfindungsgemäßer Flächengebilde, bei denen ein Teil der Maschen aufgefüllt ist. Es ist ferner möglich, Flächengebilde mit folienartigen Abschnitten herzustellen.

Es hat sich ferner als zweckmäßig erwiesen, das erfindungsgemäße Flächengebilde nach dem Waschen zu trocknen und dabei gleichzeitig am Schrumpfen zu hindern. Als Trocknungsverfahren eignen sich insbesondere die Trommeltrocknung, die Heißlufttrocknung, Trocknung mittels Infrarot-Strahlen und Mikrowellen und die Saugtrommeltrocknung. Bei Anwendung der Trommeltrocknung kann das Flächengebilde z.B. auf einfache Weise durch aufgelegte, mitlaufende Bänder am Schrumpfen gehindert werden.

## Patentansprüche

1. Flächengebilde aus einem Polymer, welches Flächengebilde Fäden aufweist, die nach Art eines Netzes über Verbindungsstellen unter Ausbildung von Maschen miteinander verbunden sind, wobei die Fäden an den Verbindungsstellen zumindest teilweise miteinander verschmolzen sind,
**dadurch gekennzeichnet, daß**
das Polymer im wesentlichen Cellulose ist.

2. Flächengebilde nach Anspruch 1, **dadurch gekennzeichnet, daß** ein Teil der Maschen aufgefüllt ist.

3. Flächengebilde nach Anspruch 1, **dadurch gekennzeichnet, daß** sämtliche Maschen aufgefüllt sind.

4. Flächengebilde nach einem der Ansprüche 1 bis 3, **dadurch gekennzeichnet, daß** es folienartige Abschnitte aufweist.

5. Verfahren zur Herstellung eines Flächengebildes gemäß einem der Ansprüche 1 bis 4, bei welchem Verfahren eine formbare Masse, welche das Polymer enthält, mittels einer Extrusionsdüse geformt wird, die zwei Gruppen von Spinnöffnungen aufweist, die gegeneinander bewegbar und derartig angeordnet sind, daß die Maschen gebildet werden können,
**dadurch gekennzeichnet, daß**
als formbare Masse eine Lösung von Cellulose in einem wässerigen tertiären Aminoxid eingesetzt wird, welche nach Verlassen der Extrusionsdüse über einen Luftspalt in ein wässeriges Fällbad geführt wird.

6. Verfahren nach Anspruch 5, **dadurch gekennzeichnet, daß** die mittels der Extrusionsdüse geformte Celluloselösung im Luftspalt verstreckt wird, wobei die Verstreckung in Richtung der Extrusion und/oder quer dazu erfolgen kann.

7. Verfahren nach einem der Ansprüche 5 oder 6, **dadurch gekennzeichnet, daß** das durch Fällen der Cellulose ausgebildete, netzartige Flächengebilde durch das Fällbad transportiert und anschließend getrocknet wird, wobei das Flächengebilde unter Spannung gehalten wird, um ein Schrumpfen zu verhindern.

8. Verfahren nach einem der Ansprüche 5 bis 7, **dadurch gekennzeichnet, daß** als tertiäres Aminoxid N-Methylmorpholin-N-oxid eingesetzt wird.

9. Verwendung einer zur Herstellung von Kunststoffnetzen an sich bekannten Spinnvorrichtung zur Herstellung von netzartigen Flächengebilden aus Cellulose gemäß einem der Ansprüche 1-4.

## Claims

1. A planar assembly made of a polymer, which planar assembly includes threads interconnected ina net-like manner via connection sites while forming meshes, wherein the threads at least partially are fused together on the connection sites,
**characterized in that**
the polymer substantially is cellulose.

2. A planar assembly according to claim 1, **characterized in that** a portion of the meshes is filled up.

3. A planar assembly according to claim 1, **characterized in that** all of the meshes are filled up.

4. A planar assembly according to any of claims 1 to 3, **characterized in that** it comprises film-like sections.

5. A process for producing a planar assembly according to any one of claims 1 to 4, in which process a moldable mass containing the polymer is molded by means of an extrusion die comprising two groups of spinning orifices capable of being moved relative to each other and arranged so as to enable the formation of meshes,
**characterized in that**
a solution of cellulose in an aqueous tertiary amine oxide is used as the moldable mass, which solution is conducted into an aqueous precipitation bath via an air gap after having left the extrusion die.

6. A process according to claim 5, **characterized in that** the cellulose solution molded by means of the extrusion die is stretched in the air gap, stretching being feasible in the extrusion direction and/or transverse thereto.

7. A process according to any of claims 5 or 6, **characterized in that** the net-like planar assembly formed by cellulose precipitation is transported through the precipitation bath and subsequently dried while keeping the planar assembly under tension in order to prevent shrinking.

8. A process according to any of claims 5 to 7, **characterized in that** N-methylmorpholine-N-oxide is used as the tertiary amine oxide.

9. The use of a spinning device known per se for producing synthetic nets, for the production of net-like planar assemblies of cellulose according to any of claims 1 to 4.

## Revendications

1. Matériau plat en polymère, comprenant des filaments, qui forment une structure plate, qui sont liés ensemble à des emplacements de liaison en formant des mailles, à la manière d'un treillis, et qui sont fondus ensemble aux emplacements de liaison, au moins partiellement,
**caractérisé en ce que** :
le polymère est essentiellement de la cellulose.

2. Matériau plat selon la revendication 1, **caractérisé en ce qu'**une partie des mailles sont pleines.

3. Matériau plat selon la revendication 1, **caractérisé en ce que** toutes les mailles sont pleines.

4. Matériau plat selon l'une des revendications 1 à 3, **caractérisé en ce que** le matériau plat présente des portions réalisées à la manière de feuilles.

5. Procédé pour réaliser des matériaux plats selon l'une des revendications 1 à 4, dans lequel une masse qui se prête à un formage et qui contient le polymère, est formée au moyen d'une buse d'extrusion, qui présente deux groupes d'ouvertures de filage, qui sont mutuellement mobiles et qui sont agencées de manière à pouvoir former des mailles,
**caractérisé en ce que**
la masse qui se prête à un formage est une cellulose dissoute dans une solution aqueuse d'un oxyde d'une amine tertiaire, qui, après avoir quitté les buses d'extrusion, transite par un espace d'air pour arriver dans un bain de régénération aqueux.

6. Procédé selon la revendication 5, **caractérisé en ce que** la solution de cellulose, formée par la buse d'extrusion, est étirée dans l'espace d'air, suivant la direction de l'extrusion et / ou suivant une direction perpendiculaire à celle-ci.

7. Procédé selon l'une des revendications 5 ou 6, **caractérisé en ce que** le matériau plat en cellulose, formé à la manière d'un treillis, est transporté à travers le bain de régénération pour être ensuite séché, tout en étant maintenu sous tension pour empêcher un retrait.

8. Procédé selon l'une des revendications 5 à 7, **caractérisé en ce que** l'oxyde d'amine tertiaire est l'oxyde de la N-méthylmorpholine.

9. Utilisation d'une installation de filage connue destinée à la fabrication de treillis en matières synthétiques, pour fabriquer à partir de cellulose, un matériau plan, formé à la manière d'un treillis, selon l'une des revendications 1 - 4.
